Europäisches Patentamt

European Patent Office

Office européen des brevets

(19)

(11) EP 0 538 218 B1

(12) EUROPEAN PATENT SPECIFICATION

(45) Date of publication and mention
of the grant of the patent:
03.04.1996 Bulletin 1996/14

(51) Int Cl.⁶: **H04B 7/005**, H03H 21/00,
H04L 25/03

(21) Application number: 92850213.7

(22) Date of filing: **09.09.1992**

(54) **Non-linear feedback equalizer**

Nichtlinearer rückgekoppelter Entzerrer

Egalisateur rétroactif non-linéaire

(84) Designated Contracting States:
DE FR GB IT

(30) Priority: 16.10.1991 SE 9103018

(43) Date of publication of application:
21.04.1993 Bulletin 1993/16

(73) Proprietor: **TELEFONAKTIEBOLAGET L M
ERICSSON**
S-126 25 Stockholm (SE)

(72) Inventor: **Bang, Göran**
**S-175 48 Järfälla (SV)**

(74) Representative: **Mrazek, Werner et al**
**Dr. Ludwig Brann Patentbyra AB**
**P.O. Box 1344**
**S-751 43 Uppsala (SE)**

(56) References cited:
EP-A- 0 411 741         US-A- 4 422 175
US-A- 4 745 623         US-A- 4 985 902
US-A- 5 005 184

**Description**

TECHNICAL FIELD

The present invention relates to a non-linear decision feedback equalizer in digital communication systems, comprising a prefilter containing N filter coefficients $c_1$, $c_2$, ..., $c_N$, where N is a positive integer, a feedback filter and a non-linear decision logic.

BACKGROUND OF THE INVENTION

Non-linear decision feedback equalizers of the type described above are previously known from for instance John G. Proakis, "Digital Communications", 1989, McGraw-Hill. These previously known equalizers work well in situations where the impulse response of the channel comprises a main peak that is stronger than the time dispersion peaks that follow later in time. If, however, the main peak is weaker than the time dispersion peaks this equalizer does not work as well.

SUMMARY OF THE INVENTION

An object of the present invention is to provide an equalizer that is also suitable for channels where the main peak in the impulse response of the channel can be weaker than the dispersion peaks.

In accordance with the invention this object is solved by a nonlinear decision feedback equalizer that comprises a pre-filter containing N filter coefficients $c_1$, $c_2$, ..., $c_N$, where N is a positive integer, a feedback filter containing M filter coefficients $b_1$, $b_2$, ..., $b_M$, where M is a positive integer, and a nonlinear decision logic, which equalizer is characterized by said pre-filter comprising:

(a) 2N-1 taps with 2N-2 delay means distributed therebetween;

(b) means for subtracting the output signal from tap 2N-k, where k is a positive integer assuming the values 1, ..., N-1, from the output signal from tap k and multiplying means for multiplying each such difference signal with the corresponding filter coefficient $c_k$;

(c) means for multiplying the output signal from the centre tap N by $c_N$; and

(d) means for adding the output signals from all the multiplying means.

BRIEF DESCRIPTION OF THE DRAWING

The invention, further objects and advantages obtained by the invention are best understood by reference to the following description taken together with the accompanying drawing, in which:

Fig. 1    shows a typical impulse response for a radio channel;

Fig. 2    shows another impulse response that sometimes occurs on a radio channel;

Fig. 3    shows a block diagram of a preferred embodiment of an equalizer in accordance with the present invention suitable for the GSM-standard;

Fig. 4    shows parts of the block diagram in Fig. 3 in more detail; and

Fig. 5    shows the modifications in the embodiment of Figs. 3 and 4 that are necessary to make it useful also for linearly modulated systems, for instance in accordance with the digital standard IS-54 of the United States.

PREFERRED EMBODIMENT

The invention will be described below with reference to a digital radio communication system. However, it is appreciated that the invention is also useful in other types of digital channels, for instance in connection with wire-bound transmission.

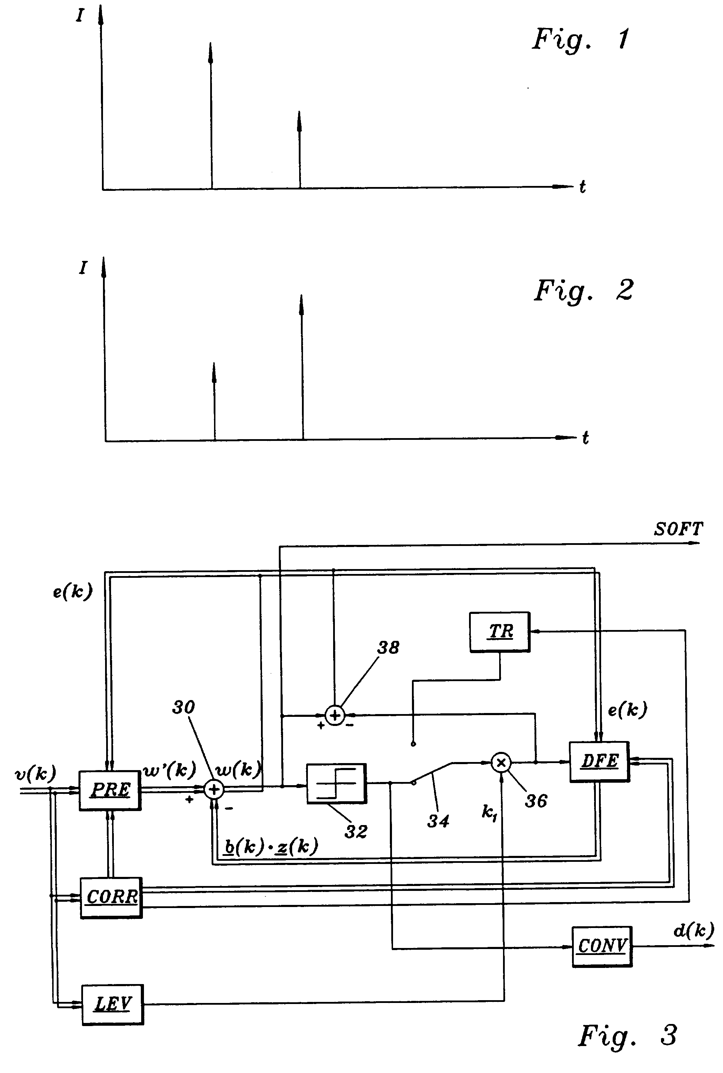

Fig. 1 shows a typical impulse response of a radio channel. This impulse response is characterized by the main peak being stronger than the possible later occurring dispersion peaks. In the figure only one time dispersion peak has been indicated for sake of simplicity, but in practice several can exist. The purpose of the above mentioned pre-filter is to compensate for the influence of the time dispersion peaks.

Fig. 2 shows another impulse response that sometimes occurs on a radio channel. In this case the time dispersion peak is stronger than the main peak. It has been found that pre-filters in known equalizers do not handle this situation especially well.

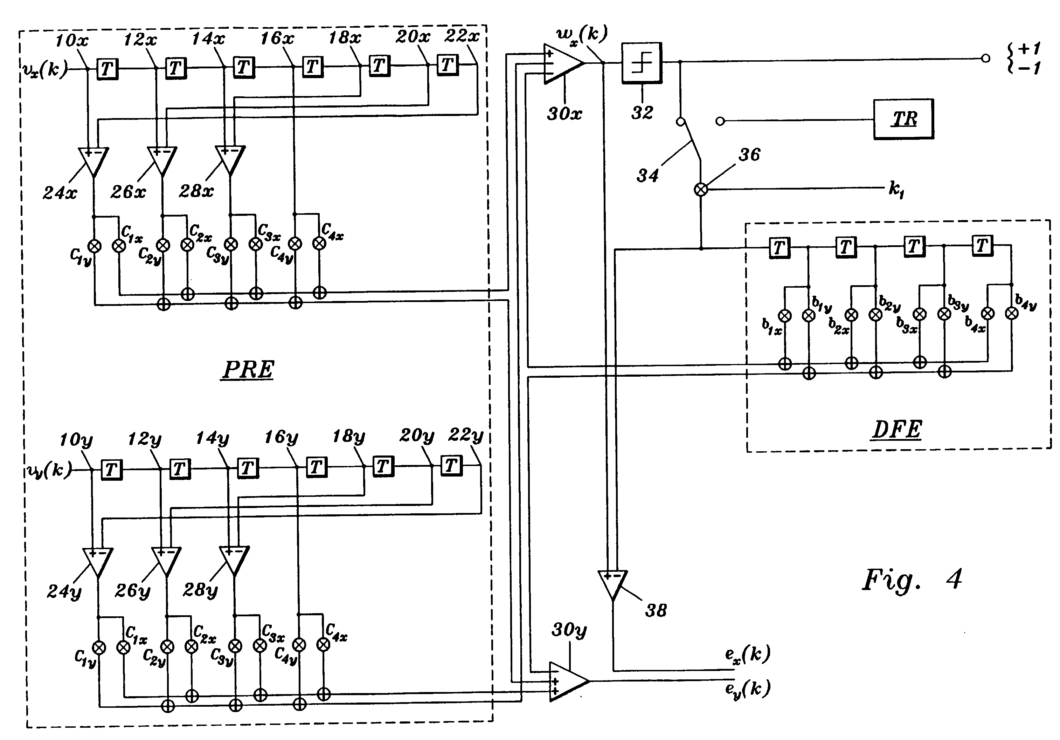

A preferred embodiment of the present invention will now be described with reference to Figs. 3 and 4. For sake of simplicity an equalizer for GMSK-modulation (Gaussian Minimum Shift Keying) of the type used in the European GSM-standard is described. The principles described in connection with this equalizer, however, are also applicable for other modulation types, for instance different types of linear modulation. In the following underlined letters, for instance $\underline{v}$, designate vectors the components of which also can be complex valued.

The equalizer of Fig. 1 comprises a pre-filter PRE, that at point kT in time, where T is the sampling interval, is characterized by N complex filter coefficients that form a vector:

$$\underline{c}(k) = \{c_1(k), c_2(k), ..., c_N(k)\}$$

At point kT in time at the delay chain of filter PRE there is a complex valued input vector:

$$\underline{v}(k) = \{v(k), v(k-1), ..., v(k-2N+2)\}$$

In pre-filter PRE from this input vector $\underline{v}(k)$ a new vector is formed:

$$\underline{v}'(k) = \{v(k)-v(k-2N+2), v(k-1)-v(k-2N+3), ..., v(k-N+1)\}$$

The vector $\underline{v}'(k)$ is characterized by containing elements that comprise the difference between elements in $\underline{v}(k)$ that pair-wise surround the centre element $v(k-N+1)$. However, the centre element itself is mapped unchanged as the last element in $\underline{v}'(k)$.

The output signal from pre-filter PRE is formed by the scalar product:

$$w'(k) = \underline{c}(k) \cdot \underline{v}'(k)$$

The equalizer also contains a feedback filter DFE (Decision Feedback Equalizer), that is characterized by a complex valued coefficient vector containing M coefficients:

$$\underline{b}(k) = \{b_1(k), b_2(k-1), ..., b_M(k-M+1)\}$$

At point kT in time the feedback chain of feedback filter DFE contains:

$$\underline{z}(k) = \{z(k), z(k-1), ..., z(k-M+1)\}$$

In the feedback filter the scalar product $\underline{b}(k) \cdot \underline{z}(k)$ is formed. This scalar product is subtracted in an adder 30 from the output signal $w'(k)$ from pre-filter PRE for obtaining the signal:

$$w(k) = \underline{c}(k) \cdot \underline{v}'(k) - \underline{b}(k) \cdot \underline{z}(k)$$

The real part of the complex valued signal $w(k)$ is fed to a decision circuit 32 that outputs the signal +1 or -1, depending on the sign of real part. The determined sign is fed to feedback filter DFE for decision feedback. The real part of the output signal from adder 30 also forms a measure of the certainty in the decision of circuit 32, and can therefore be used as so called "soft" information in the following channel decoder. The real part of signal $w(k)$ is also fed to an adder 38. Furthermore the sign reversed value of the output signal of decision circuit 32 is fed to the adder 38. The output signal from adder 38 forms together with the imaginary part of the signal $w(k)$ an error signal $e(k)$, which is used for updating the coefficient vector $\underline{c}(k)$ of prefilter PRE and the coefficients $\underline{b}(k)$ of feedback filter DFE. This updating is performed in accordance with the equations:

$$\underline{c}(k+1) = \underline{c}(k) - \alpha\, e(k)\, conj(\underline{v}'(k))$$

where $conj(\underline{v}'(k))$ is the complex conjugate of the vector $\underline{v}'(k)$ and

$$\underline{b}(k+1) = \underline{b}(k) + \beta\, e(k)\, conj(\underline{z}(k))$$

where $conj(\underline{z}(k))$ is the complex conjugate of the vector $\underline{z}(k)$, $\alpha$ and $\beta$ being convergence factors that control the convergence speed and stability.

The output signal from decision circuit 32, that is either +1 or -1, is also fed to a converter CONV, that maps the signals +1,1 to the signals 1 and 0, respectively, for obtaining the output signal $d(k)$ of the equalizer.

The part of the equalizer described so far relates to the decision mode of the signal processing, that is equalizing of input data. However, before the decision mode can start the equalizer has to be synchronized with the data stream and trained with a known training sequence.

The synchronization is performed in a correlator CORR. This correlator is fed with signals from a signal burst. Somewhere in this burst there is a known training sequence, with which the equalizer is to be synchronized. Since the known training sequence has also been distorted by the radio channel the burst is correlated with an exact locally generated training sequence. The correlator can for instance be implemented as two identical FIR-filters, one for the real part and one for the imaginary part, the coefficients of which are time reversed versions of the training sequence. When the absolute value of the correlation is a maximum the received data sequence is synchronized with the training sequence stored in the filter coefficients of the correlator. In this position the correlator CORR outputs a synchronization signal to a training sequence generator TR, and at the same time a switch 34 is switched in such a way that feedback filter DFE now will receive the known training sequence comprising the values +1 and -1. At the same time the correlator CORR adjusts the coefficients $C_N$ in pre-filter PRE such that

$$C_N(init) = \gamma \, conj(corr)$$

where $\gamma$ is a constant and conj(corr) is the complex conjugate of the maximum correlation (absolute value) obtained during synchronization. The remaining coefficients in pre-filter PRE and feedback filter DFE are set to 0. Thereafter pre-filter PRE is again fed with that part of the signal burst that corresponds to the training sequence, and this is done in such a way that the value of the first training bit in the signal burst corresponds to the position of $c_N$, and at the same time the sequence generated by training sequence generator TR is fed into feedback filter DFE (the sampled signal burst is stored outside of the equalizer, so that appropriate parts of the burst can be read at different instances). With the exact, locally in the training sequence generator TR generated training sequence and the received distorted training sequence the coefficients in pre-filter PRE and feedback filter DFE can now be adjusted for compensating the distorsion of the channel. When the training sequence has ended the filters of the equalizer are suitably adjusted. Switch 34 is now switched to the lower position i Fig. 3, whereafter the equalizer receives data that do not belong to the training sequence. The equalizer now works in so called decision mode.

The filter coefficients are updated in accordance with the above equations for $\underline{c}(k+1)$ and $\underline{b}(k+1)$ in both training mode and decision mode. However, it can be appropriate to reduce the convergence factors $\alpha$ and $\beta$ in decision mode as compared to training mode in order to make the equalizer more robust.

The performance of the described equalizer can be further improved by monitoring the received signal level for establishing a reference level for the equalizer. This is done in a level sensor LEV. The reference level can be determined by different measures of the received signal. Examples of such measures are the maximum absolute value of the elements $v(k)$ in the burst, the average value of the absolute values of a predetermined number of signal values $v(k)$ received by the equalizer or a low pass filtered version of the absolute values of $v(k)$. In the two last mentioned cases the equalizer can handle time varying channels having fading dips.

With the sensed level the level sensor LEV can adjust a constant $k_1$, by which the input signal to feedback filter DFE is multiplied. The relation

$$k_1 = \delta \, LEV$$

can be appropriate for constant $k_1$, where LEV is the signal level as detected by level detector LEV in accordance with one of the above methods.

Fig. 4 shows the structure of pre-filter PRE and feedback filter DFE more in detail. Pre-filter PRE has been divided into an upper section that receives the real part $v_x(k)$ of the input signal $v(k)$ and a lower section that receives the imaginary part $v_y(k)$ of the input signal $v(k)$. In the following description "x" relates to the real part and "y" to the imaginary part of respective signals.

In this case pre-filter PRE contains seven taps, which correspond to four complex coefficients $c_1$, $c_2$, $c_3$ och $c_4$. Since both the upper and lower sections of prefilter PRE are built up in a similar way, only the upper section will be described. This section of pre-filter PRE contains six delay elements T. Before, between and after these elements signals are tapped from taps 10x, 12x, 14x, 16x, 18x, 20x and 22x, respectively. The signal from centre tap 16x is multiplied by the real part $c_{4x}$ and the imaginary part $c_{4y}$, respectively, of coefficient $c_4$. The signal from tap 14x to the left of centre tap 16x is reduced by the signal from tap 18x to the right of centre tap 16x in an adder 28x. The difference signal is multiplied on the one hand by the real part $c_{3x}$ and on the other hand by the imaginary part $c_{3y}$ of coefficient $c_3$. Taps 12x, 20x and 10x, 22x, which are positioned symmetrically around centre tap 16x, are processed in a similar way. The signals that have been multiplied by the real part and the imaginary part, respectively, are added on separate lines. In the corresponding way two output signals from the lower section of pre-filter PRE are formed. The four signals obtained in this way are combined in adder 30, which comprises one section 30x and one section 30y for forming the complex product $w'(k)$.

Essential differences between this pre-filter PRE and pre-filters in previously known equalizers are taps 18x, 20x, 22x, that follow after centre tap 16x, adders 24x, 26x, 28x and corresponding elements in the lower section of the filter. These elements are the reason that the equalizer in accordance with the invention better can handle a radio channel with the impulse response shown in Fig. 2.

Feedback filter DFE in this embodiment contains four coefficients $b_1$, $b_2$, $b_3$ and $b_4$. This filter is of conventional type for equalizers. The output signal from this filter is subtracted from signal $w'(k)$ in adders 30x and 30y, respectively, for obtaining signal $w(k)$. The real part $w_x(k)$ of this signal is fed to decision circuit 32, the output signal of which is either +1 or -1, and forms the output signal from the part of the equalizer that is shown in Fig. 4.

The equalizer described above is suitable for use in the European GSM-system. In this case it has been found that four coefficients in the pre-filter and four coefficients in the feedback filter are suitable values. However, it is appreciated that other values are also possible.

Suitable values for $\alpha$ and $\beta$ are:

During training phase:    $\alpha = 0.015$,    $\beta = 0.04$
During decision phase:    $\alpha = 0.0075$,    $\beta = 0.02$

If it is assumed that the detection of the signal level is based on a normed peak value suitable values for $\gamma$ and $\delta$ are:
$$\gamma = 0.5$$
$$\delta = 0.7$$
The processing of a signal burst in the equalizer is in the GSM-standard suitably performed in the following way.

1. Perform a correlation.

2. Thereafter perform a training phase during the 26 bit training sequence of the GSM-burst.

3. Update the coefficients during the right half burst (58 bits).

4. Continue the equalization for the three last tail bits to allow the last bits of coded data to leave the equalizer.

5. Perform another 26 bit training sequence in accordance with paragraph 2 above or, alternatively, use the coefficient values obtained in the previous training phase.

6. Jump to the first tail bit of the left half burst and continue the training during further three bit intervals, i.e. let switch 34 remain in the upper position (Fig. 3) and feed data corresponding to three zeroes into feedback filter DFE (delayed three sampling intervals).

7. Continue the updating during the left half burst (58 bits) from the left to the right with switch 34 in the lower position (Fig. 3).

8. Continue the equalization during three further bit intervals into the training sequence to allow the last coded bits to leave the equalizer.

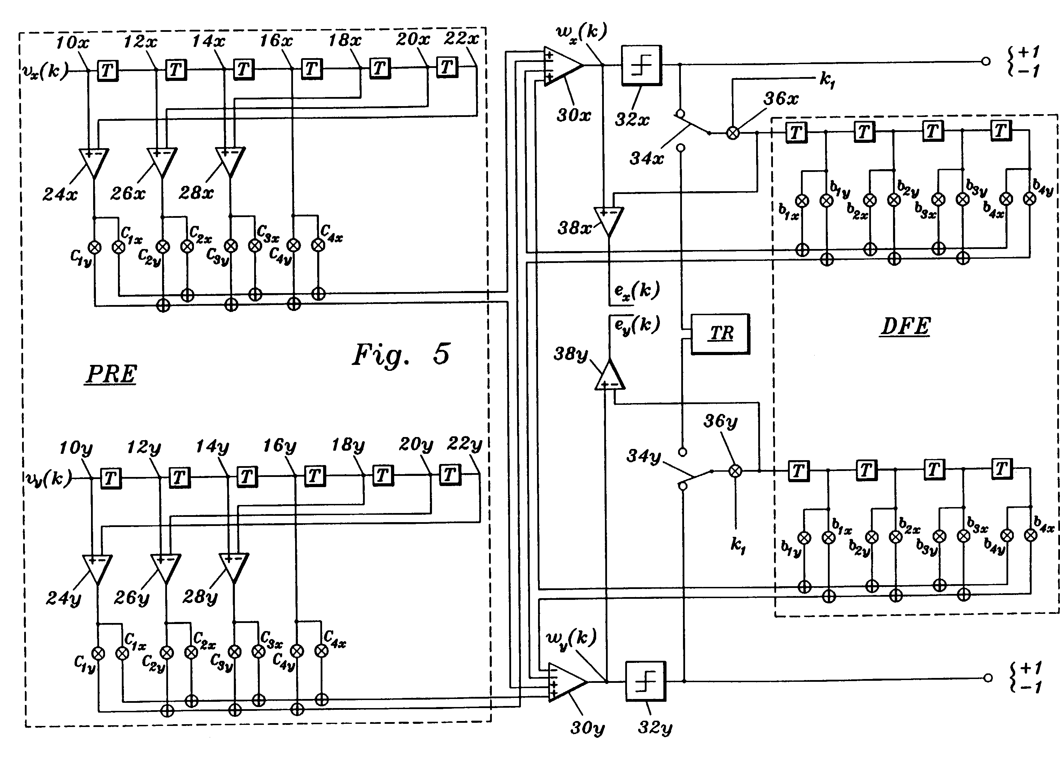

Fig. 5 shows modifications of the embodiment in Figs. 3 and 4 necessary to adapt it to linearly modulated systems, for instance in accordance with the digital standard IS-54 of the United States. These differences are concentrated to the right section of Fig. 5 and imply that also the imaginary part $w_y(k)$ of signal $w(k)$ is processed in a similar way as the real part $w_x(k)$. Therefore the circuit in Fig. 5 contains supplementary elements $32_y$, $34_y$, $36_y$, $38_y$ and a further filter section in feedback filter DFE. Elements 32x, 34x, 36x and 38x correspond to elements 32, 34, 36 and 38, respectively, in Fig. 4. It should also be noted that adders 30x and 30y each have been provided with a further input for receiving the output signal from the lower filter section in feedback filter DFE. It should also be noted that the output signal now is received from two decision circuits 32x, 32y, one for the real part and one for the imaginary part of signal $w(k)$.

A person skilled in the art realizes that different changes and modifications of the invention are possible without departure from the scope of the invention, which is defined by the accompanying patent claims.

**Claims**

1. A decision feedback equalizer in digital communication systems, comprising a pre-filter (PRE) containing N filter coefficients $c_1$, $c_2$, ..., $c_N$, where N is a positive integer, a feedback filter (DFE) comprising M filter coefficients $b_1$, $b_2$, ..., $b_M$, where M is a positive integer, and a non-linear decision logic (32), **characterized by** said pre-filter (PRE) comprising:

   (a) 2N-1 taps (10x,y; 26x,y; 28x,y; 14x,y; 16x,y; 18x,y; 20x,y; 22x,y) with 2N-2 delay means (T) distributed therebetween;

(b) means (24x,y; 26x,y; 28x,y) for subtracting the output signal from tap 2N-k, where k is a positive integer assuming the values 1, ..., N-1, from the output signal of tap k and multiplying means for multiplying each such difference signal with the filter coefficient $c_k$;

(c) means for multiplying the output signal from centre tap N (16x,y) with $c_N$; and

(d) means for adding the output signals from all multiplying means.

2. The equalizer in accordance with claim 1, **characterized by** means (CORR) for synchronization and initialization of the prefilter (PRE) and feedback filter (DFE) to each signal burst.

3. The equalizer in accordance with claim 2, **characterized by** said synchronization means (CORR) after synchronization adjusting said filter coefficient $c_N$ in said pre-filter (PRE) to a first measure of the maximum absolute value of the correlation between a pre-determined training sequence and the current signal burst, while the remaining filter coefficients in said pre-filter (PRE) and feedback filter (DFE) are set to 0.

4. The equalizer of claim 3, **characterized by** said first measure comprising a constant ($\gamma$) multiplied by the complex conjugate of the maximum absolute value of the correlation between the training sequence and the current signal burst.

5. The equalizer of claim 3 or 4, **characterized by** a training sequence generator (TR) for feeding the pre-determined training sequence to said feedback filter (DFE) instead of the output signal from said decision logic (32) during a training period after the synchronization, during which training period said prefilter (PRE) receives that part of the current signal burst that corresponds to the training sequence.

6. The equalizer of any of the preceeding claims, **characterized by** means (LEV) for sensing a second measure of the signal level of the signals received by the equalizer and means (36) for multiplying ($k_1$) the input signal to said feedback filter with this second measure.

7. The equalizer of claim 6, **characterized by** the second measure being formed by a constant ($\delta$) multiplied by the absolute value of the signal component in the current signal burst with the largest magnitude.

8. The equalizer of claim 6, **characterized by** said second measure being formed by a constant multiplied by the average value of the magnitudes of a predetermined number of signal components fed to the pre-filter of the equalizer.

**Patentansprüche**

1. Rückgekoppelter Entscheidungsentzerrer für digitale Kommunikatonssysteme, enthaltend:

einen Vorfilter (PRE) mit N Filterkoeffizienten $c_1$, $c_2$, ..., $c_N$, wobei N eine positive ganze Zahl ist, einen rückgekoppelten Filter (DFE) mit M Filterkoeffizienten $b_1$, $b_2$, ..., $b_M$, wobei M eine positive ganze Zahl ist, und eine nichtlineare Entscheidungslogik (32),

dadurch **gekennzeichnet,** daß

der Vorfilter (PRE) enthält:

(a) 2N-1 tap-Abgriffe (10x,y; 26x,y; 28x,y; 14x,y; 16x,y; 18x,y; 20x,y; 22x,y) mit 2N-2 Verzögerungselementen (T), die zwischen diesen verteilt sind;

(b) eine Vorrichtung (24x,y; 26x,y; 28x,y) zum Subtrahieren des Ausgangssignals des tap-Abgriffs 2N-k, wobei k eine positive ganze Zahl ist, die die Werte 1, ..., N-1 annimmt, von dem Ausgangssignal des tap-Abgriffs k, und eine Multipliziervorrichtung zum Multiplizieren jedes derartigen Differenzsignals mit dem Filterkoeffizienten $c_k$;

(c) eine Vorrichtung zum Multiplizieren des Ausgangssignals des mittleren tap-Abgriffs N (16x,y) mit $c_N$; und

(d) eine Vorrichtung zum Addieren des Ausgangssignals aller Multipliziervorrichtungen.

**2.** Entzerrer nach Anspruch 1, dadurch gekennzeichnet, daß eine Vorrichtung (CORR) vorgesehen ist, zum Synchronisieren und Initialisieren des Vorfilters (PRE) und des rückgekoppelten Filters (DFE) für jedes Signalbündel.

**3.** Entzerrer nach Anspruch 2, dadurch gekennzeichnet, daß die Synchronisiervorrichtung (CORR) nach der Synchronisierung die Angleichung der Filterkoeffizienten $c_N$ des Vorfilters (PRE) bewirkt, auf ein erstes Maß des Maximalwerts der Korrelation zwischen einer vorbestimmten Trainingssequenz und des momentanen Signalbündels, während die verbleibenden Filterkoeffizienten des Vorfilters (PRE) und des rückgekoppelten Filters (DFE) zu 0 eingestellt sind.

**4.** Entzerrer nach Anspruch 3, dadurch gekennzeichnet, daß das erste Maß eine Konstane ($\gamma$) enthält, die mit dem konjugiert Komplexen des maximalen Absolutwerts der Korrelation zwischen der Trainingsfolge und dem momentanen Signalbünde multipliziert ist.

**5.** Entzerrer nach Anspruch 3 oder 4, dadurch gekennzeichnet, daß ein Trainingssequenz-Generator (TR) vorgesehen ist, zum Zuführen der vorbestimmten Trainingssequenz zu dem rückgekoppelten Filter (DFE) anstelle des Ausgangssignals der Entscheidungslogik (32), während einer Trainingsperiode nach der Synchronisierung, wobei während dieser Trainingsperiode der Vorfilter (PRE) den Teil des momentanen Signalbündels empfängt, der der Trainingssequenz entspricht.

**6.** Entzerrer nach einem der vorstehenden Ansprüche, dadurch gekennzeichnet, daß eine Vorrichtung (LEV) vorgesehen ist, zum Erfassen eines zweiten Maßes des Signalpegels der durch den Entzerrer empfangenen Signale, und eine Vorrichtung (36) zum Multiplizieren ($k_1$) des Eingangssignals des rückgekoppelten Filters mit diesem zweiten Maß.

**7.** Entzerrer nach Anspruch 6, dadurch gekennzeichnet, daß das zweite Maß durch eine Konstante ($\delta$) gebildet ist, die mit dem Absolutwert der Signalkomponente des momentanen Signalbündels mit der größten Amplitude multipliziert ist.

**8.** Entzerrer nach Anspruch 6, dadurch gekennzeichnet, daß das zweite Maß durch eine Konstante gebildet ist, die durch den Durchschnittswert der Amplituden einer vorbestimmten Anzahl von Signalanteilen, die dem Vorfilter oder dem Entzerrer zugeführt werden, multipliziert ist.


**Revendications**

**1.** Un égaliseur à rétroaction de décision dans des systèmes de communication numériques, comprenant un pré-filtre (PRE) contenant N coefficients de filtre $c_1$, $c_2$, ..., $c_N$, dans lesquels N est un entier positif, un filtre de rétroaction (DFE) comprenant M coefficients de filtre $b_1$, $b_2$, ..., $b_M$, dans lesquels M est un entier positif, et une logique de décision non linéaire (32), caractérisé en ce que le pré-filtre (PRE) comprend :

(a) 2N-1 prises (10x,y; 26x,y; 28x,y; 14x,y; 16x,y; 18x,y; 20x,y; 22x,y) avec 2N-2 moyens de retard (T) répartis entre elles;
(b) des moyens (24x,y; 26x,y; 28x,y) pour soustraire le signal de sortie de la prise 2N-k, en désignant par k un entier positif prenant les valeurs 1, ..., N-1, du signal de sortie de la prise K, et des moyens de multiplication pour multiplier chacun de ces signaux de différence par le coefficient de filtre $c_k$;
(c) des moyens pour multiplier par $c_N$ le signal de sortie de la prise centrale N (16x,y); et
(d) des moyens pour additionner les signaux de sortie de tous les moyens de multiplication.

**2.** L'égaliseur selon la revendication 1, caractérisé par des moyens (CORR) pour la synchronisation et l'initialisation du pré-filtre (PRE) et du filtre de rétroaction (DFE) sur chaque salve de signal.

**3.** L'égaliseur selon la revendication 2, caractérisé en ce qu'après la synchronisation, les moyens de synchronisation (CORR) règlent le coefficient de filtre $c_N$ dans le pré-filtre (PRE) à une première mesure de la valeur absolue maximale de la corrélation entre une séquence d'apprentissage prédéterminée et la salve de signal courante, tandis que les coefficients de filtre restants dans le pré-filtre (PRE) et le filtre de rétroaction (DFE) sont fixés à 0.

4. L'égaliseur de la revendication 3, caractérisé en ce que la première mesure comprend une constante ($\gamma$) multipliée par le conjugué complexe de la valeur absolue maximale de la corrélation entre la séquence d'apprentissage et la salve de signal courante.

5. L'égaliseur de la revendication 3 ou 4, caractérisé par un générateur de séquence d'apprentissage (TR) qui est destiné à appliquer la séquence d'apprentissage prédéterminée au filtre de rétroaction (DFE), à la place du signal de sortie de la logique de décision (32), pendant une période d'apprentissage qui fait suite à la synchronisation, et au cours de cette période d'apprentissage le pré-filtre (PRE) reçoit la partie de la salve de signal courante qui correspond à la séquence d'apprentissage.

6. L'égaliseur de l'une quelconque des revendications précédentes, caractérisé par des moyens (LEV) pour détecter une seconde mesure du niveau de signal des signaux qui sont reçus par l'égaliseur, et des moyens (36) pour multiplier ($k_1$) par cette seconde mesure le signal d'entrée du filtre de rétroaction.

7. L'égaliseur de la revendication 6, caractérisé en ce que la seconde mesure est formée par une constante ($\delta$) multipliée par la valeur absolue de la composante de signal dans la salve de signal courante ayant l'amplitude la plus élevée.

8. L'égaliseur de la revendication 6, caractérisé en ce que la seconde mesure est formée par une constante multipliée par la valeur moyenne des amplitudes d'un nombre prédéterminé de composantes de signal qui sont appliquées au pre-filtre de l'égaliseur.

Fig. 1

Fig. 2

Fig. 3

Fig. 4

Fig. 5

EP 0 538 218 B1